# EUROPEAN PATENT APPLICATION

(11) **EP 4 542 190 A1**
(43) Date of publication of application: **23.04.2025**
(21) Application number: 24193855.4
(22) Date of filing: 09.08.2024
(51) Int. Cl.: G01M 3/04, G01M 3/16

(54) **LIQUID LEAK SENSOR, APPARATUS FOR DETECTING LIQUID LEAKS, AND APPLICATIONS THEREOF**

(30) Priority: 04.09.2023 US 202363536443 P
(71) Applicant: Naivelt, Vladimir, Petah Tikva 4951420 (IL)
(72) Inventor: Naivelt, Vladimir, Petah Tikva 4951420 (IL)
(74) Representative: Kutzenberger Wolff & Partner

(57) **Abstract**

Liquid leak sensor (100), apparatus for detecting liquid leaks, and applications thereof, for sensing (detecting), and providing timely notification of, liquid leaks in a variety of commercial applications, via automatic (real time), efficient, accurate, reliable, and cost effective means. Particularly applicable for sensing (detecting) liquid leaks at critical connection (junction) points (158) in liquid-containing conduits (156). Liquid leak sensor (100) includes: a sheet (106) of flexible non-conductive fabric material, configured for wrapping around, or placing under, a liquid-containing conduit; and a liquid sensitive electrically open electrical circuit (104) (of wires, fibers) interlaced throughout the fabric sheet (106), and configured for facilitating sensing of liquid when leaked from the conduit and contacting the fabric sheet, via leaked liquid effecting electrical closure of the electrical circuit (104).

## Description

### FIELD OF THE INVENTION

The present invention, in some embodiments thereof, relates to (automatic, real time) liquid leak sensing (detecting) technology, and more particularly, but not exclusively, to a liquid leak sensor, apparatus for detecting liquid leaks, and applications thereof. Exemplary embodiments of the present invention are suitable for sensing (detecting), and providing timely notification of, liquid leaks in a variety of commercial applications, via automatic (real time), efficient, accurate, reliable, and cost effective means. Some embodiments of the present invention are particularly applicable for sensing (detecting) liquid leaks at critical connection (junction) points in liquid-containing conduits.

### BACKGROUND OF THE INVENTION

Automatic, real time liquid leak sensing (detecting) technology is an important aspect in a variety of diverse commercial applications which are based on, or involve, transporting of liquids thru (large or small) conduits (pipes, tubes, channels, and the like). In such applications, automatic, real time sensing (detecting), and providing timely notification, of leaks in liquid-containing conduits is critically important. Exemplary commercial applications involve transporting of various liquids thru conduits in large and often complex heating and cooling systems. As just one example, the on-going continuing development and growth in the field of computer processing (e.g., involving computerized search engines, AI (artificial intelligence) engines, data processing and storage centers, and server centers), is accompanied by critical need for cooling numerous electronic equipment and components thereof, via air conditioning and other sophisticated type cooling systems and equipment. Additionally, a plethora of (conventional and advanced or modern) materials handling and manufacturing processes also involve transporting of liquids thru (large and small) conduits, with accompanying critical need for having capability of automatic, real time sensing (detecting), and providing timely notification, of leaks in the liquid-containing conduits.

Exemplary teachings about liquid leak sensing (detecting) technology are provided in the following disclosures: US Patent Appl. Pub. Nos.: US 2023/0141828 A1 (Adanur, et al.), US 2022/0034743 A1 (Acharya), US 2022/0113219 A1 (Stumpf, et al.), US 2022/0083032 A1 (Kim, et al.), and US 2023/0114730 A1 (Sprenger); and in US Patent Nos. US 11,725,890 (Holden, et al.), and US 9,052,252 (Lyon, et al.).

Despite such teachings, there is an on-going need for developing and implementing new and improved techniques (apparatuses, methods) for sensing (detecting), and providing timely notification of, liquid leaks in a variety of commercial applications, via automatic, efficient, accurate, reliable, and cost effective means. Moreover, there is a particular need for such sensing (detecting), and providing timely notification of, liquid leaks at critical connection (junction) points in liquid-containing conduits.

### SUMMARY OF THE INVENTION

The present invention, in some embodiments thereof, relates to (automatic, real time) liquid leak sensing (detecting) technology, and more particularly, but not exclusively, to a liquid leak sensor, apparatus for detecting liquid leaks, and applications thereof. Exemplary embodiments of the present invention are suitable for sensing (detecting), and providing timely notification of, liquid leaks in a variety of commercial applications, via automatic (real time), efficient, accurate, reliable, and cost effective means. Some embodiments of the present invention are particularly applicable for sensing (detecting) liquid leaks at critical connection (junction) points in liquid-containing conduits.

According to an aspect of some embodiments of the present invention, there is provided a liquid leak sensor, comprising: a sheet of flexible non-conductive fabric or fabric-like material, having fabric sheet top and bottom surfaces, and configured for wrapping around, or placing under, a conduit containing a liquid; and a liquid sensitive electrically open electrical circuit interlaced throughout the fabric sheet, and configured for facilitating sensing of the liquid when leaked from the conduit and contacting the fabric sheet, via the leaked liquid effecting electrical closure of the electrical circuit.

According to some embodiments of the invention, the interlaced electrical circuit includes two interlaced electrical conducting elements in the form of electrical wires or/and fibers.

According to some embodiments of the invention, the interlaced electrical circuit fabric sheet includes an electrolyte or electrolyte-like conducting substance, for additionally effecting the electrical closure of the electrical circuit. According to some embodiments of the invention, the electrolyte is a salt, that dissociates in the liquid into electrical conducting, current carrying ions. According to some embodiments of the invention, the interlaced electrical circuit fabric sheet is subject to a procedure of adding to it an aqueous solution of the electrolyte or electrolyte-like substance. According to some embodiments of the invention, the procedure includes sprinkling or dispersing drops of an aqueous solution of the electrolyte or electrolyte-like substance onto the fabric sheet top surface. According to some embodiments of the invention, the procedure includes soaking the fabric sheet in an aqueous solution of the electrolyte or electrolyte-like substance, followed by rinsing and drying the soaked fabric sheet, so as to form the interlaced electrical circuit fabric sheet throughout which is dispersed the electrolyte or electrolyte-like substance.

According to some embodiments of the invention, the liquid leak sensor is included in an apparatus for detecting liquid leaks, the apparatus comprising the liquid leak sensor, and a control and communications unit operatively connected to, and in operative communication with, the liquid leak sensor. According to some embodiments of the invention, the control and communications unit is operatively connected to, and in operative communication with, one or more local or/and remote leak status notification receiving devices.

According to some embodiments of the invention, the liquid leak sensor further comprises an inner sheet of flexible, non-conductive, liquid permeable fabric or fabric-like material, having inner fabric sheet top and bottom surfaces, with the inner fabric sheet bottom surface substantially parallel and contiguous with the interlaced electrical circuit fabric sheet top surface.

According to some embodiments of the invention, the liquid leak sensor further comprises an outer fabric sheet made of non-conductive, liquid impermeable fabric or fabric-like material, and having outer fabric sheet top and bottom surfaces, with the outer fabric sheet top surface substantially parallel and contiguous with the interlaced electrical circuit fabric sheet bottom surface, and configured for preventing passage of the leaked liquid, from a wet form of the interlaced electrical circuit fabric sheet bottom surface, thru the outer fabric sheet bottom surface. According to some embodiments of the invention, the outer fabric sheet has two co-planar opposite sides made of elastic material, for providing elasticity to the sides of the outer fabric sheet. According to some embodiments of the invention, the elastic material is rubber or rubber-like material.

According to some embodiments of the invention, the elastic co-planar opposite sides are configured with fasteners, for facilitating secure closure and wrapping of the outer fabric sheet, and of the liquid leak sensor, around the liquid conduit. According to some embodiments of the invention, the fasteners are rivets or buttons.

According to some embodiments of the invention, the outer fabric sheet includes a liquid absorbing color indicator substance, for facilitating visual type indication of the liquid leaked from the liquid conduit, in addition to electrical type indication of the leak provided via the interlaced electrical circuit fabric sheet. According to some embodiments of the invention, the outer fabric sheet is subjected to a procedure of adding a liquid absorbing color indicator substance. According to some embodiments of the invention, the procedure includes sprinkling or dispersing a powder form of the liquid absorbing color indicator onto the outer fabric sheet top surface. According to some embodiments of the invention, the procedure includes soaking the outer fabric sheet in a solution of the liquid absorbing color indicator, followed by rinsing and drying the soaked outer fabric sheet, so as to form the outer fabric sheet throughout which is dispersed the liquid absorbing color indicator substance.

According to an aspect of some embodiments of the present invention, there is provided an apparatus for detecting liquid leaks, comprising: a liquid leak sensor, comprising: an inner sheet of flexible, non-conductive, liquid permeable fabric or fabric-like material, having inner fabric sheet top and bottom surfaces, with the inner fabric sheet top surface configured for wrapping around, or placing under, a conduit containing a liquid; a middle sheet of flexible non-conductive fabric or fabric-like material, having fabric middle sheet top and bottom surfaces, with the middle fabric sheet top surface substantially parallel and contiguous with the inner fabric sheet bottom surface, and with the middle fabric sheet having therein a liquid sensitive electrically open electrical circuit interlaced throughout the middle fabric sheet and configured for facilitating sensing of the liquid when leaked from the conduit and permeated thru the inner fabric sheet bottom surface; an outer sheet of flexible, non-conductive, liquid impermeable fabric or fabric-like material, having outer fabric sheet top and bottom surfaces, with the outer fabric sheet top surface substantially parallel and contiguous with the middle fabric sheet bottom surface, and configured for preventing passage of the leaked liquid thru the outer fabric sheet bottom surface.

According to some embodiments of the invention, the leak detecting apparatus further comprises a control and communications unit, comprising: a power supply, configured for providing power to the liquid leak detecting apparatus; a leak sensor signal detector, configured for receiving from the interlaced electrical circuit, a signal indicating a leak of the liquid from the liquid conduit; and a signal transceiver, configured for receiving, from the leak sensor signal detector, a leak indication signal, and transmitting the leak indication signal to one or more local or remote leak status notification receiving devices.

According to some embodiments of the invention, the leak sensor signal detector is located inside a housing of the control and communications unit, or located outside a housing of the control and communications unit.

According to some embodiments of the invention, the one or more leak status notification receiving devices is/are a locally located computer, or/and a locally located mobile phone, or/and a remotely located computer, or/and a remotely located mobile phone, or/and a remotely located cloud type data storage / processing center. According to some embodiments of the invention, the signal transceiver transmits the leak indication signal via one or more types of signal transmission procedures and protocols, being WiFi, SMS, Bluetooth, LAN, or/and WAN.

According to an aspect of some embodiments of the present invention, there is provided a liquid leak sensor, comprising: an inner cover, a first conductive mesh sheet, a middle non-conductive fabric sheet, a second conductive mesh sheet, and an outer cover, wherein the middle non-conductive fabric sheet is configured sandwiched in between the first conductive mesh sheet and the second conductive mesh sheet, so as to form a mesh sandwich type liquid sensitive electrically open electrical circuit, configured for facilitating sensing of a liquid when leaked from a liquid-containing conduit, via the leaked liquid effecting electrical closure of the open electrical circuit.

According to some embodiments of the invention, the inner cover is made of non-conductive, liquid permeable fabric or fabric-like material, and the outer cover is made of non-conductive, liquid impermeable fabric or fabric-like material configured for preventing passage of the liquid leaked from a wet form of the mesh sandwich electrical circuit thru a bottom side of the the outer cover.

All technical or/and scientific words, terms, or/and phrases, used herein have the same or similar meaning as commonly understood by one of ordinary skill in the art to which the invention pertains, *unless otherwise specifically defined or stated herein.* Exemplary embodiments of methods (steps, procedures), apparatuses (devices, systems, components thereof), equipment, and materials, illustratively described herein are exemplary and illustrative only and are not intended to be necessarily limiting. Although methods, apparatuses, equipment, and materials, equivalent or similar to those described herein can be used in practicing or/and testing embodiments of the invention, exemplary methods, apparatuses, equipment, and materials, are illustratively described below. In case of conflict, the patent specification, including definitions, will control.

Implementation of some embodiments of the invention can involve performing or completing selected tasks manually, automatically, or a combination thereof. Moreover, according to actual instrumentation and equipment of some embodiments of the invention, several selected tasks could be implemented by hardware, by software, by firmware, or a combination thereof, using an operating system.

### BRIEF DESCRIPTION OF THE SEVERAL VIEWS OF THE DRAWINGS

Some embodiments of the present invention are herein described, by way of example only, with reference to the accompanying drawings and photographs. With specific reference now to the drawings and photographs in detail, it is stressed that the particulars shown are by way of example and for purposes of illustrative description of some embodiments of the present invention. In this regard, the description taken together with the accompanying drawings and photographs make apparent to those skilled in the art how some embodiments of the present invention may be practiced.

In the drawings and photographs:
FIG. 1 is a schematic perspective view of an exemplary embodiment of the liquid leak sensor, highlighting a first exemplary pattern of the liquid sensitive electrically open electrical circuit, in accordance with some embodiments of the invention;
FIGs. 2 and 3 are schematic top views of additional exemplary embodiments of the liquid leak sensor, highlighting additional exemplary patterns of the liquid sensitive electrically open electrical circuit, in accordance with some embodiments of the invention;
FIG. 4 is a schematic view of an exemplary embodiment of the apparatus for detecting liquid leaks, including the first exemplary embodiment of the liquid leak sensor shown in FIG. 1, in accordance with some embodiments of the invention;
FIG. 5 is a schematic perspective exploded view of another exemplary embodiment of the liquid leak sensor, including the first exemplary embodiment of the liquid leak sensor shown in FIG. 1, with addition of an outer fabric sheet, in accordance with some embodiments of the invention;
FIG. 6 is a schematic perspective exploded view of another exemplary embodiment of the liquid leak sensor, including the first exemplary embodiment of the liquid leak sensor shown in FIG. 1, with addition of an inner fabric sheet and an outer fabric sheet, in accordance with some embodiments of the invention;
FIG. 7 is a schematic perspective view of an exemplary embodiment of the liquid leak sensor outer fabric sheet, highlighting elastic sides thereof, in accordance with some embodiments of the invention;
FIG. 8 is a schematic perspective view of an exemplary embodiment of the liquid leak sensor inner fabric sheet, highlighting elastic sides thereof including fasteners (rivets or buttons), in accordance with some embodiments of the invention;
FIG. 9 is a schematic perspective view of an exemplary embodiment of the liquid leak sensor outer fabric sheet, highlighting inclusion of a liquid absorbing color indicator, in accordance with some embodiments of the invention;
FIG. 10 is a schematic perspective view of an exemplary embodiment of application of the liquid leak sensor (of FIG. 6), highlighting snug and secure wrapping of the leak sensor around a liquid conduit, via a zipper or fastening tape in the elastic sides of the liquid leak sensor outer fabric sheet, in accordance with some embodiments of the invention;
FIG. 11 is a schematic perspective view of another exemplary embodiment of application of the liquid leak sensor (of FIG. 6), highlighting snug and secure wrapping of the leak sensor around a liquid conduit, via fasteners (rivets or buttons) in the elastic sides of the leak sensor, in accordance with some embodiments of the invention;
FIG. 12 is a schematic perspective exploded view of an exemplary embodiment of application of the liquid leak sensor (of FIG. 6), highlighting placement of the leak sensor under a liquid conduit (having a T-junction), in accordance with some embodiments of the invention;
FIG. 13 is a schematic view of an exemplary embodiment of the apparatus for detecting liquid leaks, highlighting the leak sensor signal detector located *inside* the housing of the control and communications unit, in accordance with some embodiments of the invention;
FIG. 14 is a schematic view of another exemplary embodiment of the apparatus for detecting liquid leaks, highlighting the leak sensor signal detector located *outside* the housing of the control and communications unit, in accordance with some embodiments of the invention;
FIG. 15 is a photograph showing a top view of an exemplary (actual) prototype liquid leak sensor, in accordance with some embodiments of the invention;
FIG. 16 is a photograph showing a top view of an exemplary (actual) prototype outer fabric sheet of the liquid leak sensor, in accordance with some embodiments of the invention;
FIG. 17 is a photograph showing a top view of an exemplary (actual) prototype inner fabric sheet of the liquid leak sensor, in accordance with some embodiments of the invention;
FIGs. 18A and 18B are photographs showing an exemplary embodiment of application of an exemplary (actual) prototype liquid leak sensor, highlighting *before* and *after* snug and secure wrapping of the leak sensor around a liquid conduit (having a T-junction configured with a fitting), via fasteners (rivets or buttons) in the elastic sides of the leak sensor, in accordance with some embodiments of the invention;
FIG. 19 is a photograph showing an exemplary embodiment of application of an exemplary (actual) prototype apparatus for detecting liquid leaks, highlighting snug and secure wrapping of the liquid leak sensor around a liquid conduit (having a T-junction configured with a fitting), via fasteners (rivets or buttons) in the elastic sides of the leak sensor, in accordance with some embodiments of the invention;
FIG. 20 is a photograph showing a perspective view of an (alternative) exemplary (actual) prototype liquid leak sensor, having a mesh sandwich type liquid sensitive electrically open electrical circuit, in accordance with some embodiments of the invention;
FIG. 21 is a schematic view of an exemplary embodiment of the apparatus for detecting liquid leaks, including an alternative embodiment of the liquid leak sensor, highlighting the leak sensor signal detector located *inside* the housing of the control and communications unit, in accordance with some embodiments of the invention; and
FIG. 22 is a schematic view of another exemplary embodiment of the apparatus for detecting liquid leaks, including an alternative embodiment of the liquid leak sensor, highlighting the leak sensor signal detector located *outside* the housing of the control and communications unit, in accordance with some embodiments of the invention.

### DESCRIPTION OF SPECIFIC EMBODIMENTS OF THE INVENTION

The present invention relates to a liquid leak sensor, apparatus for detecting liquid leaks, and applications thereof. Exemplary embodiments of the present invention are suitable for sensing (detecting), and providing timely notification of, liquid leaks in a variety of commercial applications, via automatic (real time), efficient, accurate, reliable, and cost effective means. Some embodiments of the present invention are particularly applicable for sensing (detecting) liquid leaks at critical connection (junction) points in liquid-containing conduits.

Implementation of the present invention attempts to address, and overcome, at least some of the on-going limitations and problems associated with techniques (apparatuses, methods) employed for (automatically, real time) sensing (detecting), and providing timely notification of, liquid leaks in liquid-containing conduits.

While working on techniques (apparatuses, methods) for sensing (detecting) liquid leaks in liquid-containing conduits, the inventors thought of, then made and experimented with, (relatively thin) sheets of flexible fabric (textile) and fabric-like materials having interlaced (sewn, woven) therein electrical conductive elements (e.g., wires, fibers, threads) and electrical circuitry thereof. The inventors found that such sheets of flexible fabric material are well suited for interlacing (sewing, weaving) therein a liquid sensitive electrically open electrical circuit, which can be configured for facilitating sensing of a liquid when leaked from a liquid-containing conduit, via the leaked liquid effecting electrical closure of the interlaced electrical circuit. The inventors eventually arrived at the herein disclosed and claimed embodiments and configurations of a liquid leak sensor, an apparatus including the liquid leak sensor, and applications thereof, for detecting liquid leaks in conduits.

Exemplary teachings about fabrics or textiles containing electrical conductive elements (wires, fibers, threads) are provided in the following disclosures: PCT Pat. Appl. Int'l. Pub. No.: WO 2022/153299 A1 (Slotki); and in US Patent Appl. Pub. Nos.: US 2014/0242868 A1 (Hong-Hsu, et al.), and US 2019/0017879 A1 (Sullivan, et al.).

For purposes of further understanding exemplary embodiments of the present invention, in the following illustrative description thereof, reference is made to the drawings. Throughout the following description and accompanying drawings, same reference numbers refer to same objects, components, elements, or features. It is to be understood that the invention is not necessarily limited in its application to particular details of construction or/and arrangement of exemplary apparatus set forth in the following illustrative description. The invention is capable of having other exemplary embodiments, or/and of being practiced or carried out in various alternative ways.

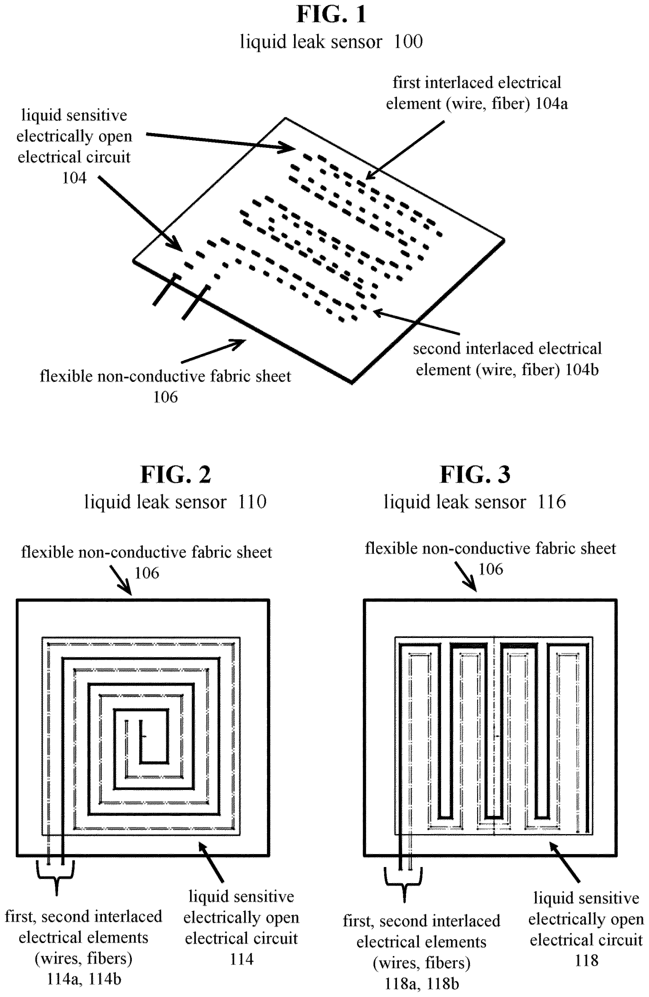

FIG. 1 is a schematic perspective view of an exemplary embodiment of the liquid leak sensor (indicated as, and referred to by, reference number 100), highlighting a first exemplary pattern of a liquid sensitive electrically open electrical circuit 104 (also referred to as electrical circuit 104) interlaced (sewn, woven) throughout an exemplary flexible non-conductive fabric sheet 106. FIGs. 2 and 3 are schematic top views of additional exemplary embodiments of the liquid leak sensor (110 and 116, respectively), highlighting additional exemplary patterns of a liquid sensitive electrically open electrical circuit (114 and 118, respectively) interlaced throughout the exemplary flexible non-conductive fabric sheet 106.

The herein disclosed liquid leak sensor (for example, 100, 110, 116, among additional exemplary embodiments of the liquid leak sensor illustratively described hereinbelow), in a non-limiting manner, and in some embodiments, includes: a sheet of flexible non-conductive fabric or fabric-like material (for example, 106), having therein an interlaced (sewn, woven) liquid sensitive electrically open electrical circuit (for example, 104, 114, 118, respectively).

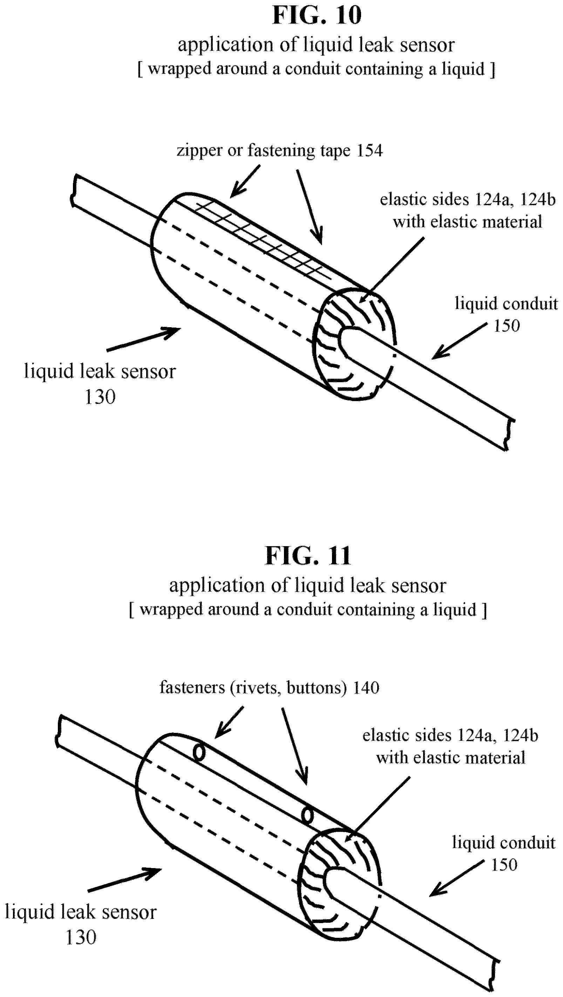

The sheet of flexible non-conductive fabric or fabric-like material (for example, 106) has fabric sheet top and bottom surfaces, and is configured for wrapping around, or placing under, a conduit containing a liquid (herein, also referred to as a liquid-containing conduit), for example, as shown in FIGs. 10 - 12 and further described hereinbelow.

The liquid sensitive electrically open electrical circuit (for example, 104, 114, 118) is interlaced (sewn, woven) within and throughout the flexible non-conductive fabric sheet 106, and is configured for facilitating sensing of the liquid when leaked from the liquid-containing conduit and contacting the fabric sheet 106, via the leaked liquid effecting electrical closure of the (initially, open) electrical circuit 104, 114, 118. In exemplary embodiments, the interlaced (sewn, woven) liquid sensitive electrically open electrical circuit 104, 114, 118 includes two interlaced (sewn, woven) electrical (conducting) elements in the form of electrical wires or/and fibers. For example, as shown in FIG. 1, electrical circuit 104 includes two interlaced (sewn, woven) electrical (conducting) elements 104a and 104b in the form of electrical wires or/and fibers. In FIG. 2, exemplary electrical circuit 114 includes two interlaced (sewn, woven) electrical (conducting) elements 114a and 114b in the form of electrical wires or/and fibers. In FIG. 3, exemplary electrical circuit 118 includes two interlaced (sewn, woven) electrical (conducting) elements 118a and 118b in the form of electrical wires or/and fibers.

In exemplary embodiments, the flexible non-conductive fabric sheet 106 (with the interlaced electrical circuit 104, 114, 118) includes an electrolyte (chemical compound, such as a salt, that dissociates in solution into [electrical conducting, current carrying] ions) or electrolyte-like conducting substance, for additionally effecting electrical closure of the (initially, open) interlaced electrical circuit 104, 114, 118. Such exemplary embodiments additionally facilitate sensing of the liquid when leaked from the liquid-containing conduit and contacting the fabric sheet 106. For providing such exemplary embodiments, the fabric sheet 106 (having therein the interlaced electrical circuit 104, 114, 118) is subjected to a procedure of adding to it an aqueous solution of an electrolyte or electrolyte-like substance. For example, via sprinkling or dispersing drops of the aqueous electrolyte solution onto the top surface of the fabric sheet 106. Alternatively, for example, via soaking the fabric sheet 106 in the aqueous electrolyte solution, followed by rinsing and drying the soaked fabric sheet, so as to form the interlaced electrical circuit fabric sheet 106 throughout which is dispersed the electrolyte or electrolyte-like substance.

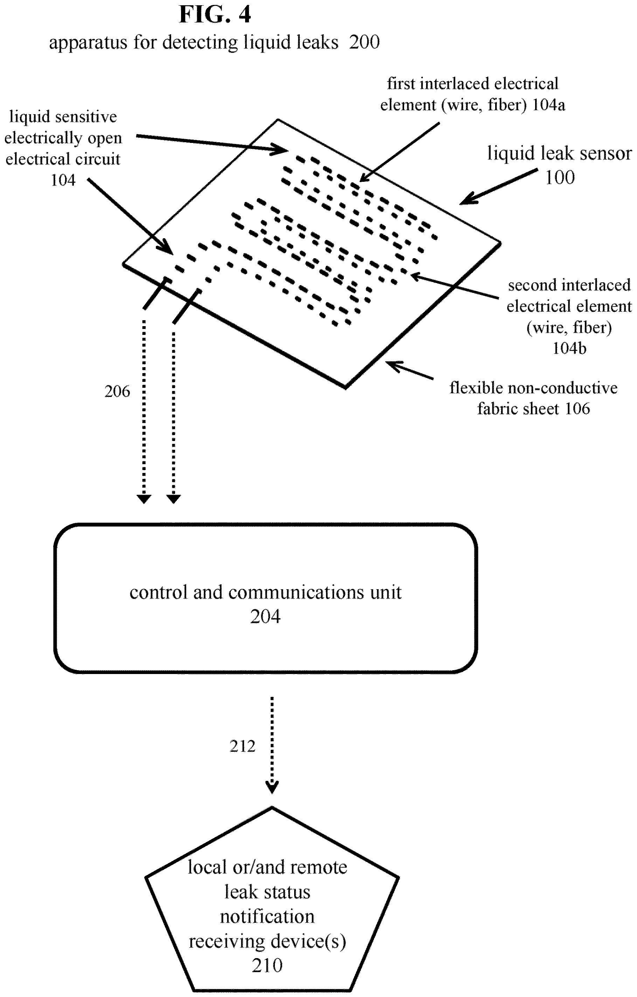

The herein disclosed apparatus for detecting liquid leaks, in a non-limiting manner, and in some embodiments, includes: a liquid leak sensor, and, a control and communications unit. FIG. 4 is a schematic view of an exemplary embodiment of the apparatus for detecting liquid leaks [indicated as, and referred to by, reference number 200], including the first exemplary embodiment of the liquid leak sensor 100 shown in FIG. 1. In exemplary embodiments, the liquid leak sensor 200 is operatively connected to, and in operative communication with, the control and communications unit 204 (in FIG. 4, such operative connection and communication are indicated by the pair of dotted line arrows 206 therebetween). In exemplary embodiments, the control and communications unit 204 is operatively connected to, and in operative communication with, one or more local or/and remote leak status notification receiving devices 210 (in FIG. 4, such operative connection and communication are indicated by the dotted line arrow 212 extending therebetween).

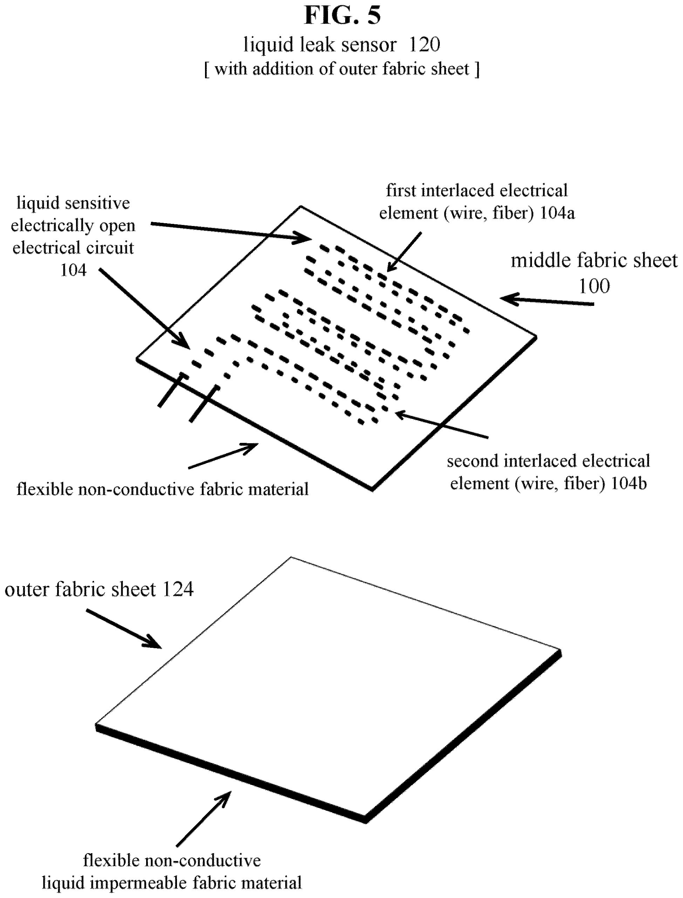

FIG. 5 is a schematic perspective exploded view of another exemplary embodiment of the liquid leak sensor (indicated as, and referred to by, reference number 120), including the first exemplary embodiment of the liquid leak sensor 100 described above and shown in FIG. 1 (in FIG. 5, also referred to as the middle fabric sheet 100), with addition of an outer fabric sheet (for example, outer fabric sheet 124). In such an exemplary embodiment, the outer fabric sheet 124 is flexible, non-conductive, liquid impermeable (i.e., waterproof, resisting liquid permeation) fabric or fabric-like material, having outer fabric sheet top and bottom surfaces, with the outer fabric sheet top surface substantially parallel and contiguous with the interlaced electrical circuit fabric sheet (middle fabric sheet 100) bottom surface. The outer fabric sheet 124 is configured for preventing permeation and passage of leaked liquid, from the (wet) interlaced electrical circuit fabric sheet (middle fabric sheet 100) bottom surface, thru the outer fabric sheet bottom surface. In exemplary embodiments, the outer fabric sheet 124, similar to middle fabric sheet 100, is configured for wrapping around, or placing under, a conduit containing a liquid (liquid-containing conduit), for example, as shown in FIGs. 10 - 12.

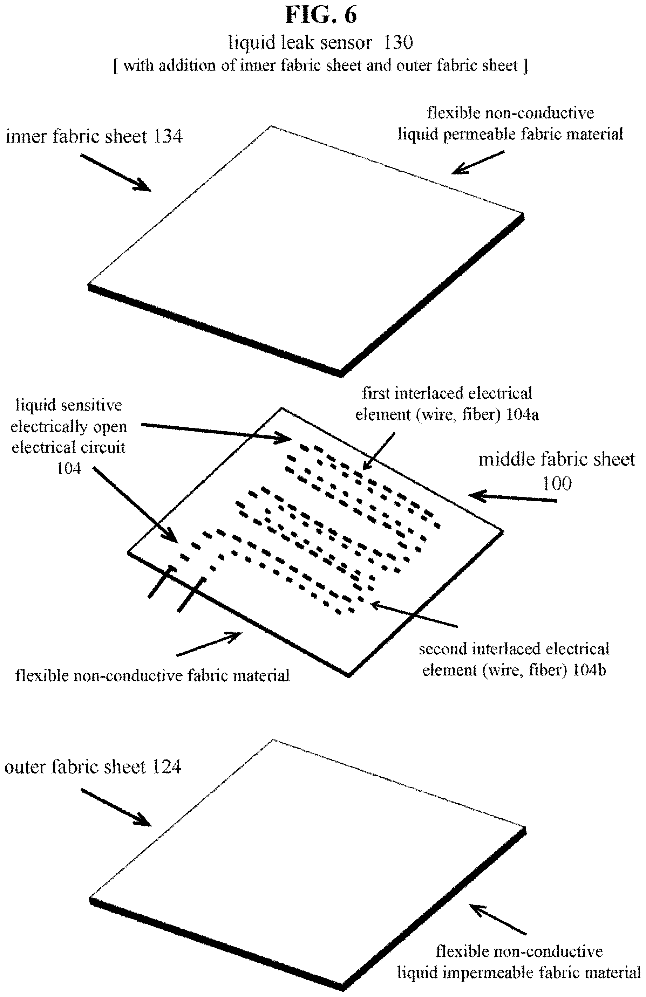

FIG. 6 is a schematic perspective exploded view of another exemplary embodiment of the liquid leak sensor (indicated as, and referred to by, reference number 130), including the first exemplary embodiment of the liquid leak sensor 100 shown in FIG. 1 (in FIG. 6, also referred to as the middle fabric sheet 100), with addition of an inner fabric sheet (for example, inner fabric sheet 134) and an outer fabric sheet (for example, outer fabric sheet 124).

In such an exemplary embodiment, the inner sheet 134 is flexible, non-conductive, liquid permeable fabric or fabric-like material, having inner fabric sheet top and bottom surfaces, with the inner fabric sheet top surface configured for wrapping around, or placing under, a conduit containing a liquid, for example, as shown in FIGs. 10 - 12.

Additionally, in such an exemplary embodiment, the middle fabric sheet 100 (corresponding to liquid leak sensor 100) includes flexible non-conductive fabric or fabric-like material, having fabric middle sheet top and bottom surfaces, with the middle fabric sheet top surface substantially parallel and contiguous with the inner fabric sheet bottom surface. The middle fabric sheet 100 has therein a liquid sensitive electrically open electrical circuit 104 interlaced throughout the middle fabric sheet 100 and is configured for facilitating sensing of the liquid when leaked from the conduit and permeated thru the inner fabric sheet bottom surface.

The outer fabric sheet 124 is the same as that additionally included in the preceding described exemplary liquid leak sensor 120 shown in FIG. 5. Namely, the outer fabric sheet 124 is flexible, non-conductive, liquid impermeable fabric or fabric-like material, having outer fabric sheet top and bottom surfaces, with the outer fabric sheet top surface substantially parallel and contiguous with the interlaced electrical circuit fabric sheet (middle fabric sheet 100) bottom surface. The outer fabric sheet 124 is configured for preventing permeation and passage of leaked liquid, from the bottom surface of the (wet) interlaced electrical circuit fabric sheet (middle fabric sheet 100), thru the bottom surface of the outer fabric sheet 124.

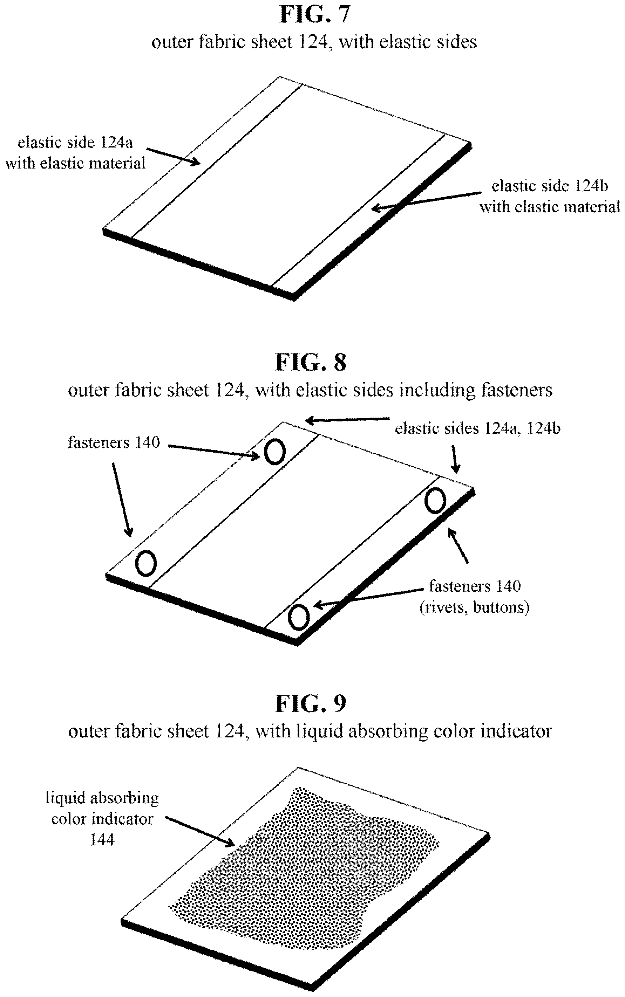

FIG. 7 is a schematic perspective view of an exemplary embodiment of the liquid leak sensor outer fabric sheet 124, highlighting elastic sides thereof. In exemplary embodiments, the liquid leak sensor outer fabric sheet 124 has two co-planar opposite sides 124a and 124b made of elastic material (for example, rubber, or rubber-like material), for providing elasticity (resiliency) to the sides 124a, 124b of the outer fabric sheet 124.

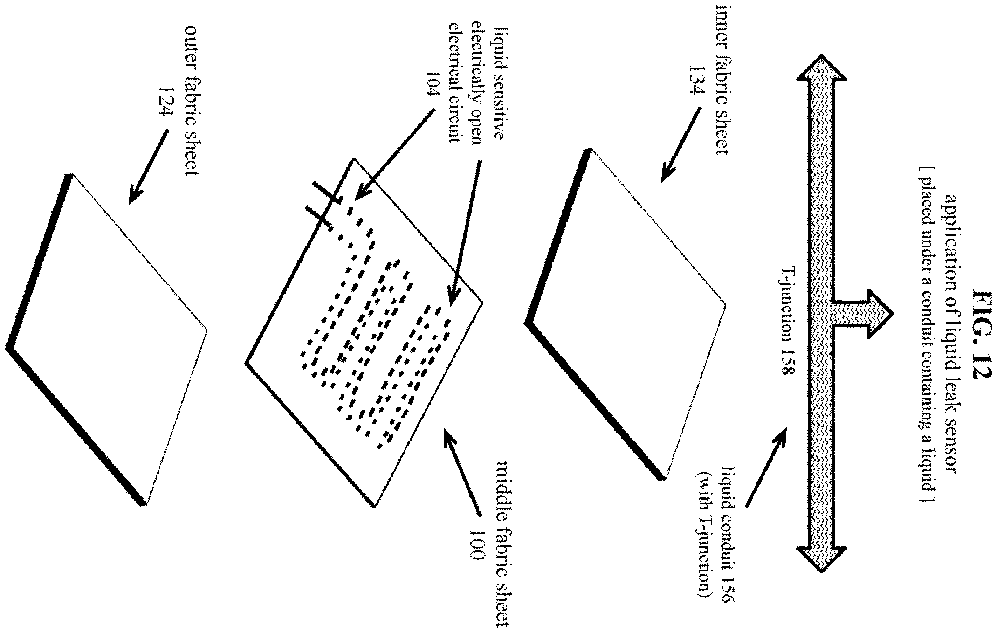

FIG. 8 is a schematic perspective view of an exemplary embodiment of the liquid leak sensor outer fabric sheet 124, highlighting the two co-planar opposite sides 124a, 124b having elastic material (for example, rubber or rubber-like material), within which are configured fasteners (rivets or buttons) 140, for facilitating secure closure and wrapping of the outer fabric sheet 124, in particular, and of the overall liquid leak sensor 120, 130, in general, around a liquid conduit. Such exemplary embodiment is particularly applicable for sensing (detecting) liquid leaks at critical conduit connection (junction) points (configured without, or with fittings), such as at a T-junction type conduit connection (junction) point (configured without, or with fittings), for example, as shown in FIG. 12.

FIG. 9 is a schematic perspective view of an exemplary embodiment of the liquid leak sensor outer fabric sheet 124, highlighting inclusion of a liquid absorbing color indicator 144. In exemplary embodiments, the outer fabric sheet 124 includes a liquid absorbing color indicator substance 144 (substance that changes its color upon absorption of liquid), for facilitating visual (eye-ball) type indication of a leak in a liquid conduit, in addition to the (automatic, real time) electrical type indication of a leak provided via the interlaced electrical circuit fabric sheet (middle fabric sheet) 100.

In such exemplary embodiments, the outer fabric sheet 124 is subjected to a procedure of adding a liquid absorbing color indicator substance 144. For example, via sprinkling or dispersing a powder form of liquid absorbing color indicator 144 onto the outer fabric sheet top surface. Alternatively, for example, via soaking the outer fabric sheet 124 in a solution of liquid absorbing color indicator 144, followed by rinsing and drying the soaked outer fabric sheet, so as to form the outer fabric sheet 124 throughout which is dispersed liquid absorbing color indicator substance 144.

FIG. 10 is a schematic perspective view of an exemplary embodiment of application of the liquid leak sensor (for example, liquid leak sensor 130 described above with reference to FIGs. 6 - 7), highlighting snug and secure wrapping of the liquid leak sensor 130 around a liquid conduit 150, via zipper or fastening tape 154 configured in the elastic sides 124a, 124b of the liquid leak sensor outer fabric sheet 124.

FIG. 11 is a schematic perspective view of another exemplary embodiment of application of the liquid leak sensor (for example, liquid leak sensor 130 described above with reference to FIGs. 6 - 8), highlighting snug and secure of wrapping the liquid leak sensor 130 around a liquid conduit 150, via fasteners (rivets or buttons) 140 configured in the elastic sides 124a, 124b of the liquid leak sensor outer fabric sheet 124.

FIG. 12 is a schematic perspective exploded view of an exemplary embodiment of application of the liquid leak sensor (for example, liquid leak sensor 130 described above and shown in FIG. 6), highlighting placement of the liquid leak sensor 130 under a liquid conduit 156 that includes a T-junction 158.

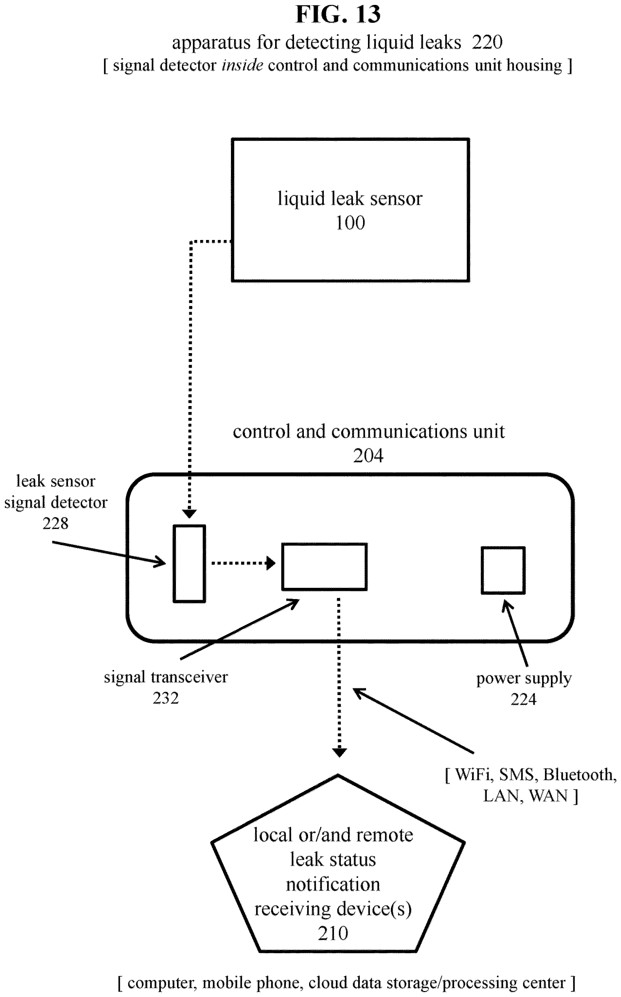

FIG. 13 is a schematic view of an exemplary embodiment of the apparatus for detecting liquid leaks (indicated as, and referred to by, reference number 220, and based on apparatus 200 described above and shown in FIG. 4), highlighting selected components of the control and communications unit, whereby a leak sensor signal detector is located *inside* the housing of the control and communications unit. In FIG. 13, dotted line arrows represent operative (functional) connections and communication between the indicated components.

In exemplary embodiments, the control and communications unit 204 includes: a power supply 224, a leak sensor signal detector 228, and a signal transceiver 232.

The power supply 224 is configured for providing power to the liquid leak detecting apparatus 220.

The leak sensor signal detector 228 is configured for receiving from the interlaced electrical circuit 104, a signal indicating a leak of liquid from the liquid conduit. In exemplary embodiments, the leak sensor signal detector 228 is an A-D (analog to digital) signal converter type device, configured for receiving an analog leak indication signal from the liquid leak sensor 100, converting the received analog leak indication signal to a digital leak indication signal, and then sending the digital leak indication signal to the signal transceiver 232.

The signal transceiver 232 is configured for receiving, from the leak sensor signal detector 228, a (digital) leak indication signal, and transmitting the received leak indication signal to one or more local or/and remote leak status notification receiving devices 210.

In exemplary embodiments, the leak indication signal is transmitted to one or more *local* leak status notification receiving device(s) 210, such as a locally located computer (display), or/and a locally located mobile phone (display). Alternatively, or additionally, the leak indication signal is transmitted to one or more *remote* leak status notification receiving device(s) 210, such as a remotely located computer (display), or/and a remotely located mobile phone (display), or/and a remotely located (cloud type) data storage / processing center.

In exemplary embodiments, the signal transceiver 232 transmits the leak indication signal via one or more types of signal transmission procedures and protocols, such as WiFi, SMS, Bluetooth, LAN, WAN, among others.

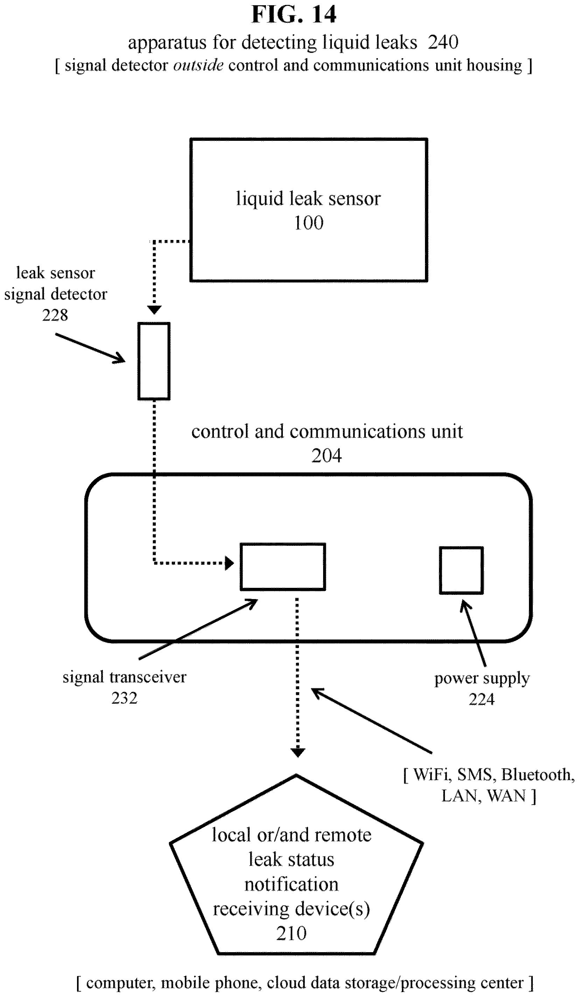

FIG. 14 is a schematic view of another exemplary embodiment of the apparatus for detecting liquid leaks (indicated as, and referred to by, reference number 240, and based on apparatus 200 described above and shown in FIG. 4), highlighting selected components of the control and communications unit, whereby a leak sensor signal detector is located *outside* the housing of the control and communications unit. In FIG. 14, dotted line arrows represent operative (functional) connections and communication between the indicated components.

The power supply 224 is configured for providing power to the liquid leak detecting apparatus 240.

Such exemplary embodiment of the apparatus for detecting liquid leaks 240 is very similar to apparatus 220 precedingly described and shown in FIG. 13, with the only difference being that the leak sensor signal detector 228 is located *outside* the housing of the control and communications unit 204. Accordingly, in such an exemplary embodiment, although the leak sensor signal detector 228 is physically located outside the housing of the control and communications unit 204, the leak sensor signal detector 228 is operatively (functionally) part of the control and communications unit 204.

### Exemplary (actual) prototype of the liquid leak sensor, and components thereof

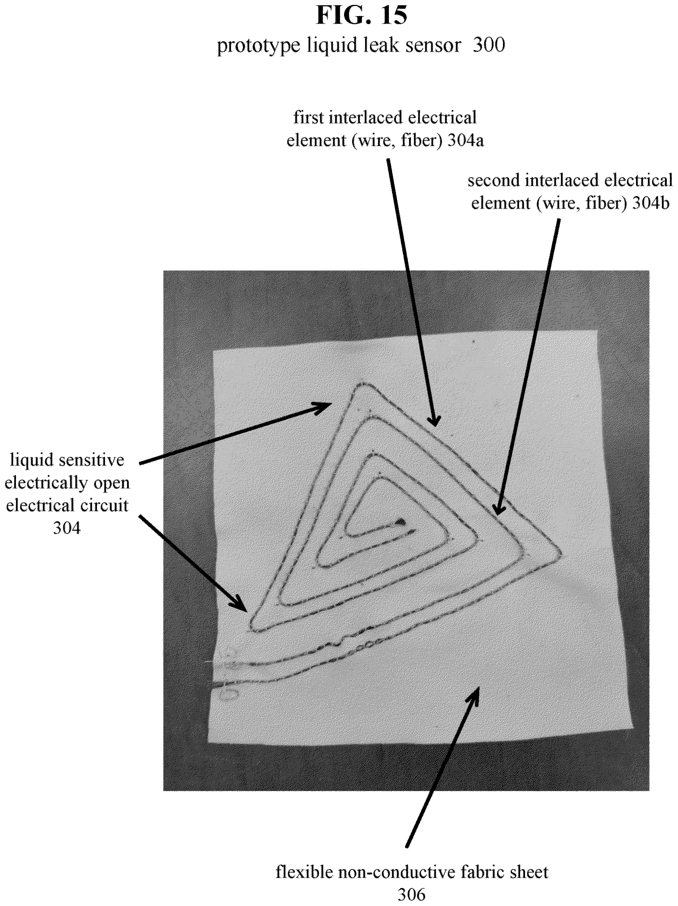

The following figures (FIGs. 15, 16, 17) are of photographs showing top views of an exemplary (actual) prototype liquid leak sensor, and components thereof.

FIG. 15 is a photograph showing a top view of an exemplary (actual) prototype liquid leak sensor 300. Such exemplary prototype liquid leak sensor 300 is based on the hereinabove illustratively described exemplary liquid leak sensors 100, 110, 116 schematically shown in FIGs. 1-3, with the only difference being the specific pattern of the liquid sensitive electrically open electrical circuit 304 interlaced (sewn, woven) within and throughout the flexible non-conductive fabric sheet 306. The interlaced (sewn, woven) liquid sensitive electrically open electrical circuit 304 includes two interlaced (sewn, woven) electrical (conducting) elements 304a and 304b in the form of electrical wires or/and fibers.

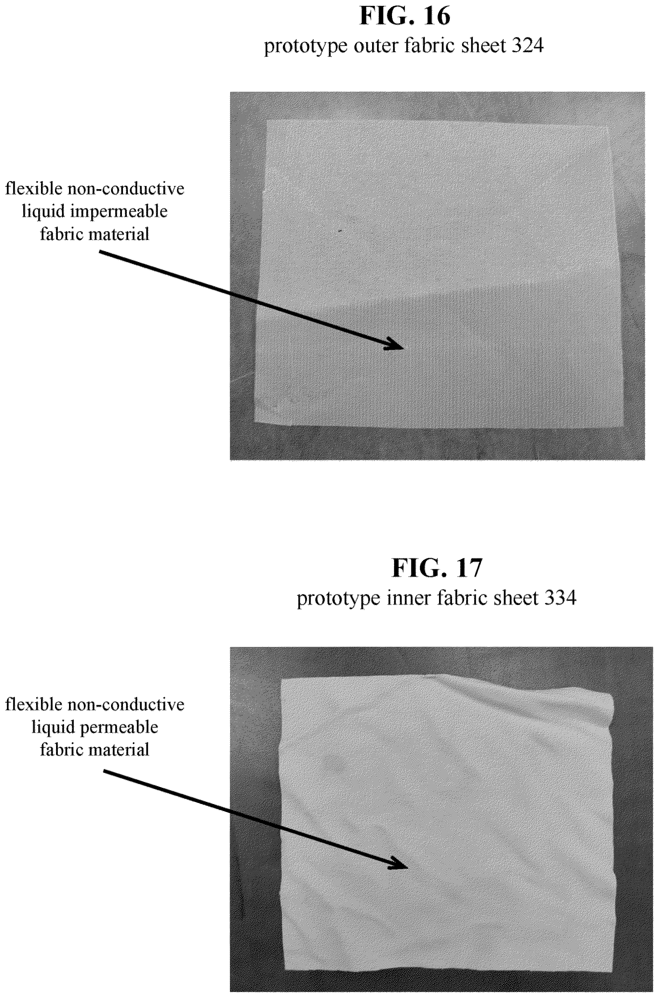

FIG. 16 is a photograph showing a top view of an exemplary (actual) prototype outer fabric sheet 324 that is suitable for use in herein disclosed exemplary embodiments of the liquid leak sensor. Such exemplary prototype outer fabric sheet 324 corresponds to the hereinabove illustratively described exemplary outer fabric sheet 124 schematically shown in FIGs. 5 - 9.

FIG. 17 is a photograph showing a top view of an exemplary (actual) prototype inner fabric sheet 334 that is suitable for use in herein disclosed exemplary embodiments of the liquid leak sensor. Such exemplary prototype inner fabric sheet 334 corresponds to the hereinabove illustratively described exemplary inner fabric sheet 134 schematically shown in FIG. 6.

### Exemplary applications of the liquid leak sensor and apparatus thereof, for detecting liquid leaks

Hereinabove illustratively described exemplary embodiments of the liquid leak sensor, and apparatus for detecting liquid leaks, are suitable for sensing (detecting), and providing timely notification of, liquid leaks in a variety of commercial applications, via automatic (real time), efficient, accurate, reliable, and cost effective means. Some embodiments of the present invention are particularly applicable for sensing (detecting) liquid leaks at critical connection (junction) points in liquid-containing conduits.

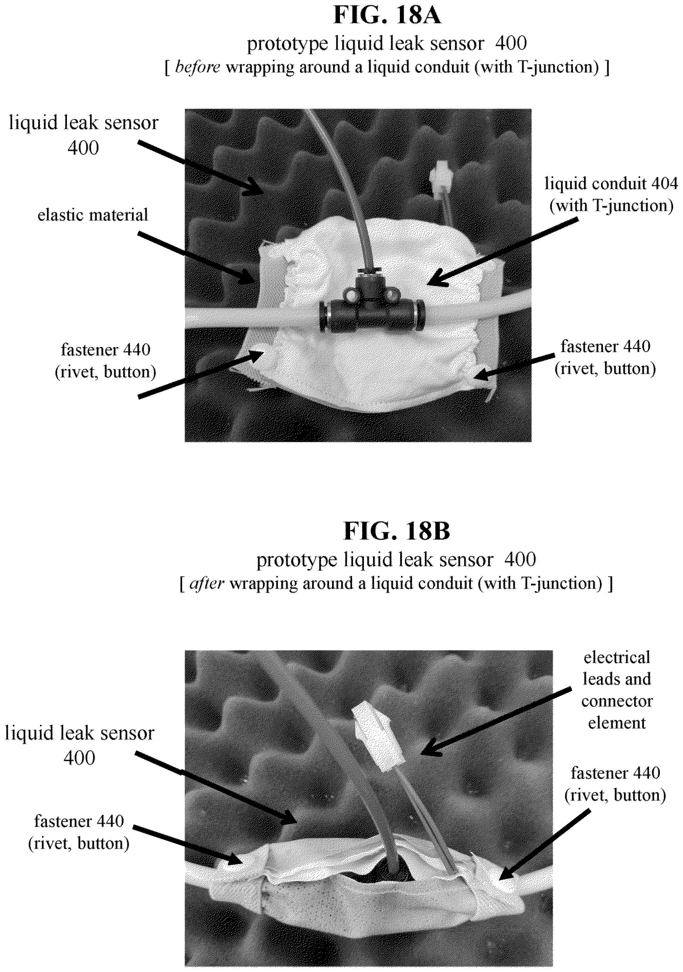

FIGs. 18A and 18B are photographs showing an exemplary embodiment of application of an exemplary (actual) prototype liquid leak sensor 400, highlighting *before* (FIG. 18A) and *after* (FIB. 18B) snug and secure wrapping of the liquid leak sensor 400 around a liquid conduit 404 (having a T-junction configured with fittings), via fasteners (rivets or buttons) 440 in the elastic sides of the liquid leak sensor 400.

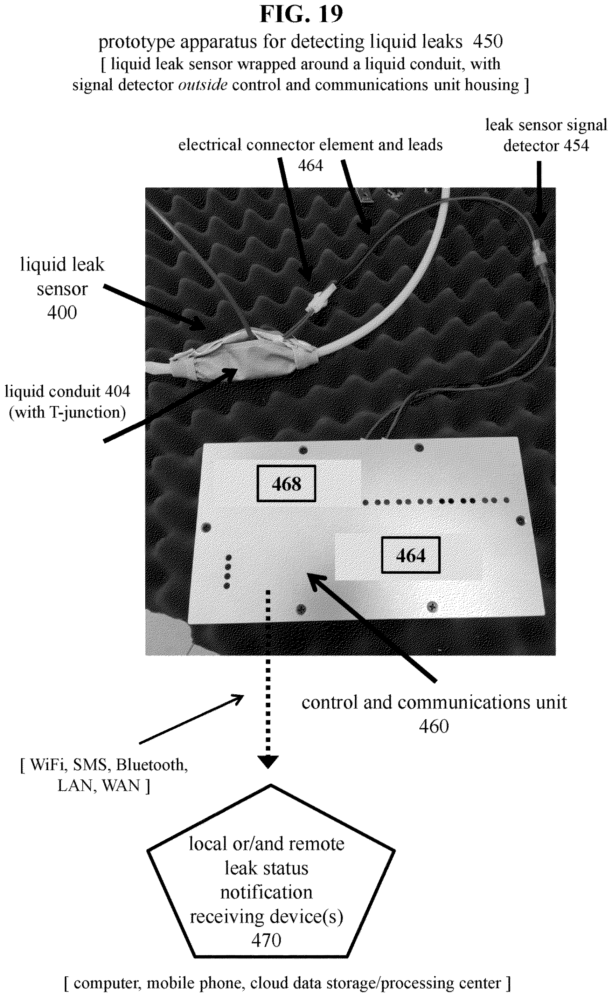

FIG. 19 is a photograph showing an exemplary embodiment of application of an exemplary (actual) prototype apparatus for detecting liquid leaks 450, highlighting snug and secure wrapping of the liquid leak sensor 400 around the liquid conduit 404 (having a T-junction configured with fittings), via fasteners (rivets or buttons) 440 in the elastic sides of the liquid leak sensor 400 (as shown in FIGs. 18A, 18B). In FIG. 19, the exemplary (actual) prototype liquid leak sensor 400 is based on the hereinabove illustratively described exemplary liquid leak sensor 130 schematically shown in FIGs. 6-8. The exemplary (actual) prototype apparatus for detecting liquid leaks 450 is based on the hereinabove illustratively described exemplary apparatus for detecting liquid leaks 240 schematically shown in FIG. 14 (with the leak sensor signal detector 454 located outside the housing of the control and communications unit 460).

Exemplary (actual) prototype apparatus for detecting liquid leaks 450 includes electrical connector element and leads 464, configured for operatively connecting the liquid leak sensor 400 to the leak sensor signal detector 454. The control and communications unit 460 includes: a power supply 464, the leak sensor signal detector 454, and a signal transceiver 468. The power supply 464 is configured for providing power to the liquid leak detecting apparatus 450. The leak sensor signal detector 454 is configured for receiving from the liquid leak sensor 400, a signal indicating a leak of liquid from the liquid conduit 404, converting the received leak indication signal from analog to digital, and then sending the digital leak indication signal to the signal transceiver 468. The signal transceiver 468 receives, from the leak sensor signal detector 454, the digital leak indication signal, and transmits the received leak indication signal to one or more local or/and remote leak status notification receiving devices 470, such as a locally located computer (display), or/and a locally located mobile phone (display), or/and a remotely located computer (display), or/and a remotely located mobile phone (display), or/and a remotely located (cloud type) data storage / processing center. The signal transceiver 468 transmits the leak indication signal via one or more types of signal transmission procedures and protocols, such as WiFi, SMS, Bluetooth, LAN, WAN, among others.

### Exemplary (actual) prototype of an alternative embodiment of a liquid leak sensor, and components thereof

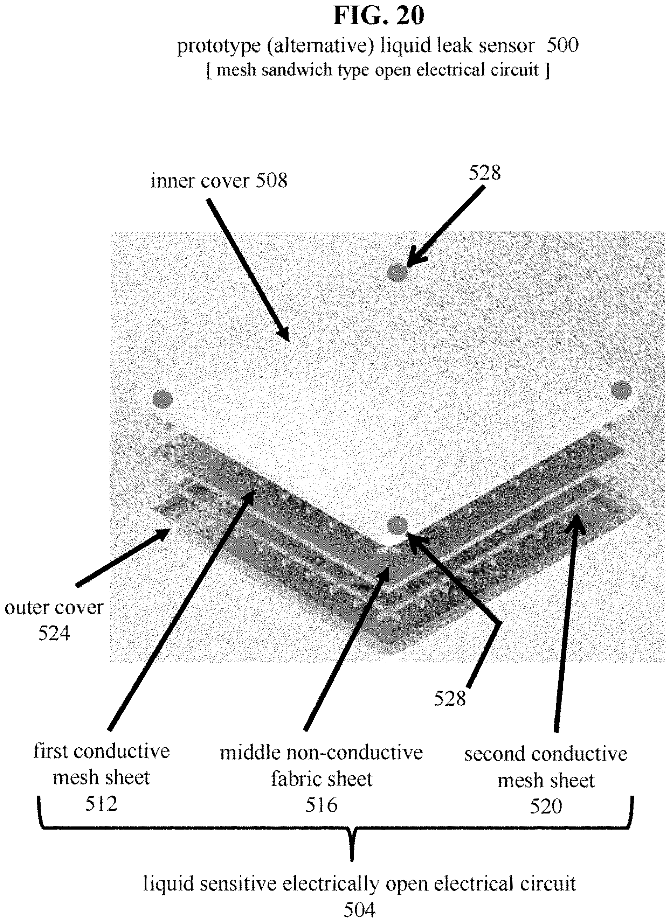

FIG. 20 is a photograph showing a perspective view of an exemplary (actual) prototype of an alternative embodiment of a liquid leak sensor (indicated as, and referred to by, reference number 500), having a mesh sandwich type liquid sensitive electrically open electrical circuit 504. Exemplary (actual) prototype (alternative) liquid leak sensor 500 includes: an inner cover 508, a first conductive mesh sheet 512, a middle non-conductive fabric sheet 516, a second conductive mesh sheet 520, and an outer cover 524. The middle non-conductive fabric sheet 516 is configured 'sandwiched' in between the first conductive mesh sheet 512 and the second conductive mesh sheet 520, so as to form the mesh sandwich type liquid sensitive electrically open electrical circuit 504.

In exemplary embodiments, the inner cover 508 is made of non-conductive, liquid permeable fabric or fabric-like material. In exemplary embodiments, the outer cover is made of non-conductive, liquid impermeable fabric or fabric-like material, and is configured for preventing permeation and passage of leaked liquid, from the (wet) mesh sandwich electrical circuit 504 thru the bottom side of the outer cover 524.

Exemplary (actual) prototype (alternative) liquid leak sensor 500 further includes (e.g., button shaped) fasteners 528, for example, configured at the corners of the inner cover 508, for fastening and securing the corners of the inner cover 508 to the inside corners of the outer cover 524, so as to firmly contain and hold the liquid sensitive electrically open electrical circuit 504 between the inside face of the inner cover 508 and the inside face of the outer cover 524.

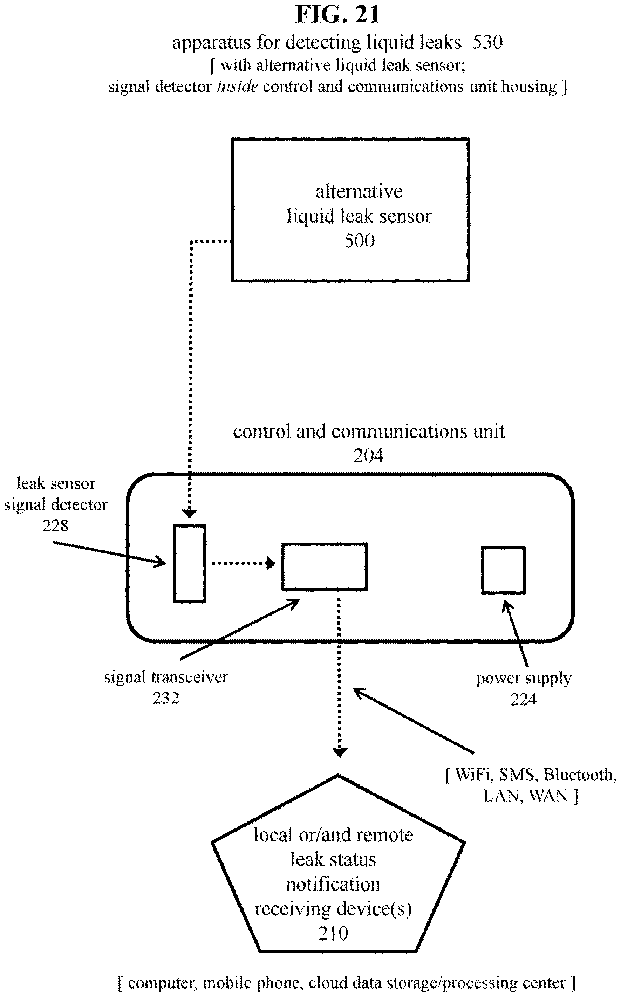

FIG. 21 is a schematic view of an exemplary embodiment of the apparatus for detecting liquid leaks 530, including the exemplary alternative embodiment of the liquid leak sensor 500 shown in FIG. 20, highlighting the leak sensor signal detector 228 located *inside* the housing of the control and communications unit 204.

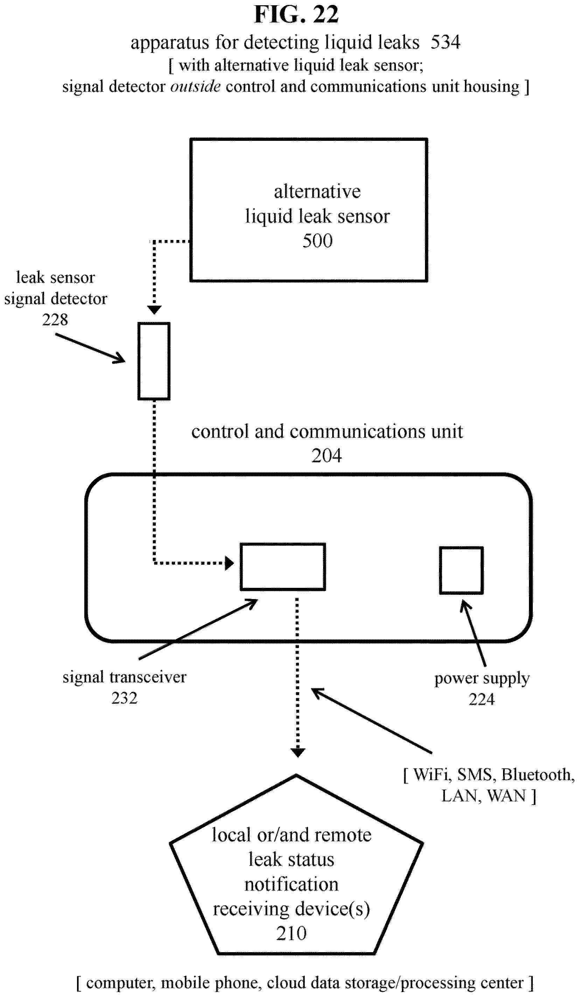

FIG. 22 is a schematic view of another exemplary embodiment of the apparatus for detecting liquid leaks 534, including the exemplary alternative embodiment of the liquid leak sensor 500 shown in FIG. 20, highlighting the leak sensor signal detector 228 located *outside* the housing of the control and communications unit 204.

Each of the following terms written in singular grammatical form: 'a', 'an', and 'the', as used herein, means 'at least one', or 'one or more'. Use of the phrase 'one or more' herein does not alter this intended meaning of 'a', 'an', or 'the'. Accordingly, the terms 'a', 'an', and 'the', as used herein, may also refer to, and encompass, a plurality of the stated entity or object, *unless otherwise specifically defined or stated herein,* or, *unless the context clearly dictates otherwise.* For example, the phrases: 'a unit', 'a device', 'an assembly', 'a mechanism', 'a component', 'an element', and 'a step or procedure', as used herein, may also refer to, and encompass, a plurality of units, a plurality of devices, a plurality of assemblies, a plurality of mechanisms, a plurality of components, a plurality of elements, and, a plurality of steps or procedures, respectively.

Each of the following terms: 'includes', 'including', 'has', 'having', 'comprises', and 'comprising', and, their linguistic / grammatical variants, derivatives, or/and conjugates, as used herein, means 'including, but not limited to', and is to be taken as specifying the stated component(s), feature(s), characteristic(s), parameter(s), integer(s), or step(s), and does not preclude addition of one or more additional component(s), feature(s), characteristic(s), parameter(s), integer(s), step(s), or groups thereof. Each of these terms is considered equivalent in meaning to the phrase 'consisting essentially of.

Each of the phrases 'consisting of, and 'consists of, as used herein, means 'including and limited to'.

Each of the phrases 'consisting essentially of, and 'consists essentially of, as used herein, means that the stated entity or item (system, system unit, system sub-unit, device, assembly, sub-assembly, mechanism, structure, component, element, or, peripheral equipment, utility, accessory, or material, method or process, step or procedure, sub-step or sub-procedure), which is an entirety or part of an exemplary embodiment of the disclosed invention, or/and which is used for implementing an exemplary embodiment of the disclosed invention, may include at least one additional 'feature or characteristic' being a system unit, system sub-unit, device, assembly, sub-assembly, mechanism, structure, component, or element, or, peripheral equipment, utility, accessory, or material, step or procedure, sub-step or sub-procedure), but only if each such additional 'feature or characteristic' does not materially alter the basic novel and inventive characteristics or special technical features, of the claimed entity or item.

The phrase 'operatively connected', as used herein, equivalently refers to the corresponding synonymous phrases 'operatively joined', and 'operatively attached'. These phrases, as used herein, mean that the described or/and shown entities are configured 'connected' to each other, in an 'operative' (ready-for-operation / ready-for-use) manner. Such operative connection, operative joint, or operative attachment, between or among the entities is according to one type, or a plurality of types, of a mechanical (physical, structural), or/and an electrical, or/and an electronic, or/and an electro-mechanical, connection or connections, involving one or more corresponding type(s) or kind(s) of mechanical (physical, structural), or/and electrical, or/and electronic, or/and electro-mechanical, equipment and components. Optionally, such operative connection, operative joint, or operative attachment, between or among the entities, may include, or may involve, one or more type(s) or kind(s) of computerized hardware or/and software equipment and components.

The phrase 'operably connectable', as used herein, equivalently refers to the corresponding synonymous phrases 'operably joinable to', and 'operably attachable to'. These phrases, as used herein, mean that the described or/and shown entities are configured 'connectable' to each other (i.e., capable of being connected to each other, having ability to be connected to each other, or having potential to be connected to each other), for subsequently forming an 'operative connection', an 'operative joint', or an 'operative attachment', between or among the entities. Such operable connectability, operable joinability, or operable attachability, between or among the entities is according to one type, or a plurality of types, of a mechanical (physical, structural), or/and an electrical, or/and an electronic, or/and an electro-mechanical, connection or connections, involving one or more corresponding type(s) or kind(s) of mechanical (physical, structural), or/and electrical, or/and electronic, or/and electro-mechanical, equipment and components. Optionally, such operable connectability, operable joinability, or operable attachability, between or among the entities, may include, or may involve, one or more type(s) or kind(s) of computerized hardware or/and software equipment and components.

It is to be fully understood that certain aspects, characteristics, and features, of the invention, which are, for clarity, illustratively described and presented in the context or format of a plurality of separate embodiments, may also be illustratively described and presented in any suitable combination or sub-combination in the context or format of a single embodiment. Conversely, various aspects, characteristics, and features, of the invention which are illustratively described and presented in combination or sub-combination in the context or format of a single embodiment, may also be illustratively described and presented in the context or format of a plurality of separate embodiments.

Although the invention has been illustratively described and presented by way of specific exemplary embodiments, and examples thereof, it is evident that many alternatives, modifications, or/and variations, thereof, will be apparent to those skilled in the art. Accordingly, it is intended that all such alternatives, modifications, or/and variations, are encompassed by the broad scope of the appended claims.

## Claims

1. A liquid leak sensor (100, 110, 116, 300, 400), comprising:
a sheet (106, 306) of flexible non-conductive fabric or fabric-like material, having fabric sheet top and bottom surfaces, and configured for wrapping around, or placing under, a conduit (150, 156, 404) containing a liquid;
and
a liquid sensitive electrically open electrical circuit (104, 114, 118, 304) interlaced throughout said fabric sheet (106, 306), and configured for facilitating sensing of said liquid when leaked from said conduit (150, 156, 404) and contacting said fabric sheet (106, 306), via said leaked liquid effecting electrical closure of said electrical circuit (104, 114, 118, 304).

2. The liquid leak sensor (100, 110, 116, 300, 400) of claim 1, wherein said interlaced electrical circuit (104, 114, 118, 304) includes two interlaced electrical conducting elements (104a, 104b; 114a, 114b; 118a, 118b; 304a, 304b) in the form of electrical wires or/and fibers.

3. The liquid leak (100, 110, 116, 300, 400) sensor of claim 1, wherein said interlaced electrical circuit fabric sheet (106, 306) includes an electrolyte or electrolyte-like conducting substance, for additionally effecting said electrical closure of said electrical circuit (104, 114, 118, 304).

4. The liquid leak sensor (100, 110, 116, 300, 400) of claim 3, wherein said electrolyte is a salt, that dissociates in said liquid into electrical conducting, current carrying ions.

5. The liquid leak sensor (100, 110, 116, 300, 400) of claim 1, included in an apparatus for detecting liquid leaks (200, 220, 240, 450), said apparatus (200, 220, 240, 450) comprising said liquid leak sensor (100, 110, 116, 300, 400), and a control and communications unit (204, 460) operatively connected to, and in operative communication with, said liquid leak sensor (100, 110, 116, 300, 400).

6. The liquid leak sensor (100, 110, 116, 300, 400) of claim 1, further comprising an inner sheet (134, 334) of flexible, non-conductive, liquid permeable fabric or fabric-like material, having inner fabric sheet top and bottom surfaces, with said inner fabric sheet bottom surface substantially parallel and contiguous with said interlaced electrical circuit fabric sheet (106, 306) top surface.

7. The liquid leak sensor (100, 110, 116, 300, 400) of claim 6, further comprising an outer fabric sheet (124, 324) made of non-conductive, liquid impermeable fabric or fabric-like material, and having outer fabric sheet top and bottom surfaces, with said outer fabric sheet top surface substantially parallel and contiguous with said interlaced electrical circuit fabric sheet (106, 306) bottom surface, and configured for preventing passage of said leaked liquid, from a wet form of said interlaced electrical circuit fabric sheet (106, 306) bottom surface, thru said outer fabric sheet (106, 306) bottom surface.

8. The liquid leak sensor (100, 110, 116, 300, 400) of claim 7, wherein said outer fabric sheet (124, 324) has two co-planar opposite sides made of elastic material, for providing elasticity to said sides (124a, 124b) of said outer fabric sheet (124, 324).

9. The liquid leak sensor (100, 110, 116, 300, 400) of claim 8, wherein said elastic material is rubber or rubber-like material.

10. The liquid leak sensor (100, 110, 116, 300, 400) of claim 8, wherein said co-planar opposite sides (124a, 124b) are configured with fasteners (140, 440), for facilitating secure closure and wrapping of said outer fabric sheet (124, 324), and of the liquid leak sensor (100, 110, 116, 300, 400), around said liquid conduit (150, 156, 404).

11. The liquid leak sensor (100, 110, 116, 300, 400) of claim 10, wherein said fasteners (140, 440) are rivets or buttons.

12. The liquid leak sensor (100, 110, 116, 300, 400) of claim 7, wherein said outer fabric sheet (124, 324) includes a liquid absorbing color indicator substance (144), for facilitating visual type indication of said liquid leaked from said liquid conduit (150, 156, 404), in addition to electrical type indication of said leak provided via said interlaced electrical circuit fabric sheet (106, 306).

13. An apparatus (200, 220, 240, 450) for detecting liquid leaks, comprising:
a liquid leak sensor (100, 110, 116, 300, 400), comprising:
an inner sheet (134, 334) of flexible, non-conductive, liquid permeable fabric or fabric-like material, having inner fabric sheet top and bottom surfaces, with said inner fabric sheet top surface configured for wrapping around, or placing under, a conduit (150, 156, 404) containing a liquid;
a middle sheet (106, 306) of flexible non-conductive fabric or fabric-like material, having fabric middle sheet top and bottom surfaces, with said middle fabric sheet top surface substantially parallel and contiguous with said inner fabric sheet bottom surface, and with said middle fabric sheet (106, 306) having therein a liquid sensitive electrically open electrical circuit (104, 114, 118, 304) interlaced throughout said middle fabric sheet (106, 306) and configured for facilitating sensing of said liquid when leaked from said conduit (150, 156, 404) and permeated thru said inner fabric sheet bottom surface;
an outer sheet (124, 324) of flexible, non-conductive, liquid impermeable fabric or fabric-like material, having outer fabric sheet top and bottom surfaces, with said outer fabric sheet top surface substantially parallel and contiguous with said middle fabric sheet bottom surface, and configured for preventing passage of said leaked liquid thru said outer fabric sheet bottom surface;
and
a control and communications unit (204, 460), comprising:
a power supply (224, 464), configured for providing power to the liquid leak detecting apparatus (200, 220, 240, 450);
a leak sensor signal detector (228, 454), configured for receiving from said interlaced electrical circuit (104, 114, 118, 304), a signal indicating a leak of said liquid from said liquid conduit (150, 156, 404); and
a signal transceiver (232, 468), configured for receiving, from said leak sensor signal detector (228, 454), a leak indication signal, and transmitting said leak indication signal to one or more local or remote leak status notification receiving devices (210, 470).

14. The liquid leak detecting apparatus (200, 220, 240, 450) of claim 13, wherein said leak sensor signal detector (228, 454) is located inside a housing of said control and communications unit (204, 460).

15. The liquid leak detecting apparatus (200, 220, 240, 450) of claim 13, wherein said leak sensor signal detector is located outside a housing of said control and communications unit (204, 460).
